# EUROPEAN PATENT APPLICATION

(11) **EP 2 383 557 A1**
(43) Date of publication of application: **02.11.2011**
(21) Application number: 10161582.1
(22) Date of filing: 30.04.2010
(51) Int. Cl.: G01L 1/20, D02G 3/44, D01F 1/09

(54) **Shear sensor**

(71) Applicant: Nanocyl S.A., 5060 Sambreville (BE)
(72) Inventor: Mezzo, Luca, IT-10076, NOLE (IT); Luizi, Frédéric, BE-5000, NAMUR (BE); Lussey, David, NORTH YORKSHIRE, Yorkshire DL 10 7QL (GB); Devaux, Eric, FR-59211, SANTES (FR); Campagne, Christine, FR-59700, MARCQ EN BAROEUL (FR); Rochery, Maryline, FR-59290, WASQUEHAL (FR); Cayla, Aurélie, FR-59000, LILLE (FR)
(74) Representative: pronovem

(57) **Abstract**

The present invention is related to a shear sensor comprising two or more electrodes and an electrically conductive textile, said sensor measuring, in use, a resistivity variation once said textile is submitted to shear deformation, said textile comprising conductive fibres having a resistivity comprised between 10² Ohm.cm and 10⁷Ohm.cm and said fibres comprising a polymer matrix and a conductive filler.

## Description

### Field of the Invention

The present invention is related to a shear sensor and a method for measuring shear deformation.

### State of the Art

The use of conductive polymer composites as strain sensors is known in the art. For example, U6276214 discloses a strain sensor wherein said strain sensor is formed in a sheet shape from composites, and said sheet shape strain sensor is fixed to an exterior of iron and iron-concrete structural products, said composites consisting of polymers and individual conductive particles dispersed in said polymers and a strain of said composites causing changes in a distance between said conductive particles and a corresponding change in the electric resistance of said composites so as to recognize values of said strain.

Also known in the art are conducting fibres as mechanical sensors. For example, BE 1,017,472 A5 discloses the use of a composite thread included in a textile for sensing pressure applied to said textile.

Document US 6,809,462 discloses sensors that comprise a transducer that converts mechanical energy into electrical energy. The transducer comprises an electro active polymer in electrical contact with at least two electrodes. When a relatively small voltage difference is applied between the electrodes, deflection of the polymer results in a measurable change in electrical energy for the transducer. The change in electrical energy may correspond to a change in resistance, capacitance, or a combination thereof. Sensing electronic circuits in electrical contact with electrodes detect the electrical energy change. In this document, the integration of said sensor in a fabric is also disclosed.

None of those documents discloses a shear sensor for sensing shear deformation.

### Aims of the Invention

The present invention aims to provide a shear sensor that can be included in a textile.

### Summary of the Invention

A first aspect of the present invention is related to a shear sensor comprising two or more electrodes and an electrically conductive textile, said sensor measuring, in use, a resistivity variation once said textile is submitted to shear deformation, said textile comprising conductive fibres having a resistivity comprised between 10² Ohm.cm and 10⁷ Ohm.cm and said fibres comprising a polymer matrix and a conductive filler.

According to particular preferred embodiments, the invention further discloses at least one or a suitable combination of the following features:
- the shear sensor further comprises insulating fibres;
- said textile is a woven textile;
- said conductive fibres are forming either the weft or the warp of said textile;
- the electrodes are arranged to measure, in use, the resistivity in a direction parallel to at least some of the conducting fibres;
- the conductive fibres are multifilament fibres;
- said polymer matrix is a polyester;
- the polymer matrix comprises polylactic acid or polycaprolactone;
- the polymer matrix comprises a co-continuous blend of at least two polymers, the conductive filler being dispersed in one of said polymers;
- said filler comprises carbon nanotubes;
- said filler is selected from the group consisting of metallic nanofibres and carbon nanofibres.

A second aspect of the invention is related to a method for measuring shear deformation comprising the steps of:
- providing a shear sensor according to the invention;
- measuring the conductivity of the textile between said two electrodes in a shear free state;
- measuring the conductivity of the textile between said two electrodes in a shear deformation to be characterised;
- comparing the conductivity in the deformed state with the conductivity in the non deformed state, the difference in conductivity being proportional to the shear deformation amplitude.

### Brief Description of the Drawings

Figure 1a represents a woven textile structure called "Plain" with a number of crossing points equal to 24 for a defined surface (= A).

Figure 1b represents a woven textile structure called "Panama 2X2" with a number of crossing points equal to 8 for a defined surface (= B).

Figure 1c represents a woven textile structure called "Hareness 4" with a number of crossing points equal to 12 for a defined surface (= C).

Figure 1d represents a woven textile structure called "Panama 2X1" with a number of crossing points equal to 16 for a defined surface (= D).

Figure 2 represents the textile system used to perform shear sensor measurement.

Figure 3 represents shear solicitation applied on a "Panama 2X1" woven textile structure.

Figure 4 represents the dynamic DC voltage response to a shear solicitation from -15mm shear through to +15mm shear of the "Panama 2X1" woven textile structure of example 1.

Figure 5 represents the static resistance response to fixed shear solicitation from -15mm shear through to +15mm shear of a "Panama 2X1" woven textile structure.

Figure 6 represents the dynamic DC voltage response to a shear solicitation woven textile structure of example 2.

Figure 7 represents the dynamic DC voltage response to a shear solicitation woven textile structure of example 3.

Figure 8 represents the dynamic DC voltage response to a shear solicitation woven textile structure of example 4.

Figure 9 represents the dynamic DC voltage response to a shear solicitation woven textile structure of example 5.

Figure 10 represents the dynamic DC voltage response to a shear solicitation woven textile structure of example 6.

Figure 11 represents the dynamic DC voltage response to a shear solicitation woven textile structure of example 7.

Figure 12 represents the dynamic DC voltage response to a shear solicitation woven textile structure of example 8.

Figure 13 represents the dynamic DC voltage response to a shear solicitation woven textile structure of example 9.

Figure 14 represents a woven structure called Twill 2x2 or Batavia da 4 or Serge 2x2.

### Figure keys

1. conductive textile
2. electrodes
3. connectors
4. conducting fibre direction

### Detailed Description of the Invention

The present invention refers to a shear sensor based on a Conductive Polymeric Composite (CPC) where conductive nanofillers are incorporated in a polymer to form a Conductive Polymeric Composite (CPC), such CPC being then spun into a fibre and then further incorporated into a final textile structure 1.

Preferably, the spinning process of said fibre is performed in a multifilament process, forming multifilament fibres.

A plurality of CPC fibres are then combined in a textile (CPC Textile) in a manner which allows the several CPC fibres to shear and/or slip (SH/SL) between each other under an external solicitation. Such SH/SL generate variation in the electrical conductivity between two points of the CPC textile. This change in resistivity is supposed to be dominated by fibre to fibre contact resistance changes instead of filler particle to filler particle resistivity changes.

The electrical conductivity (or resistivity) is then correlated to the level of SH/SL of the different CPC fibres. This way, said electrical conductivity is a function of the level of dimensional deformation of the textile structure under external solicitation. The variation of the resistivity can be then used to detect levels of dimensional changes in the textile structure.

In the present invention the resistivity of the fibres is comprised between about 10²Ohm.cm and about 10⁷Ohm.cm. This feature enhances the sensitivity of the sensor.

Preferably, conductive nanofillers are chosen from conductive additives being able to show a predominant quantum tunnelling effect as electrical conductivity mechanism once they are dispersed in a polymer. Generally, tunnelling effect is more present in the case of fillers having cylindrical or tubular shape. Those conductive nanofillers can preferably be selected from the group consisting of carbon nanotubes, carbon nanofibres, metallic fibres (whiskers) or a mixture thereof.

The use of CPC showing tunnelling effect as dominant conductivity mechanism improves the dynamical range of the resistivity variation improving the sensitivity of the measurement and noise-to-signal ratio. It is supposed that the measured changes in resistivity of the textile are mainly due to changes in quantum tunnelling of the charge carrier jumping from one fibre to another.

It is to be noted at this stage not only that a large stable and reproducible change can be observed from one deformed state to another in static measurements, but also that dynamic deformation induces a very high noise level, rendering the sensor of the invention highly sensitive to movements. Such high sensitivity can be used in movement detectors.

Preferably, the conductive fillers used in the present invention are unidirectional elongated structures having high aspect ratios, such as cylinders, tubes, whiskers or nanofibres. Such unidirectional elongation permits to reduce the level of filler concentration needed to observe quantum tunnelling conduction, without affecting too much the spinnability of the CPC.

Preferably, the fillers may comprise carbon nanotubes such as single-wall (SWCNTs) or multi-walls (MWCNTs) and are characterized by a diameter between 0,5 and 50 nm.

Alternatively, the fillers may comprise carbon nanofibres and may have different types of intrinsic graphitic structure and have a diameter comprised between 20 and 800 nm.

The fillers may also comprise metallic nanofibres or whiskers having a diameter comprised between 0,5 nm and 10 µm.

The polymer in which conductive fillers are dispersed has an electrical resistivity higher than 10E12 Ohm*cm and is chosen from the group consisting of Polylactic acid, Polycaprolactone, Polyolefines, Polyamides, Polycarbonates, Polyimmides, Polyuretanes, Polyaramides, polybenzossazoles, polyvinylchlorides, polystyrene, polyethyleneterephtalate, polyethylenenaphtenate, polybutadienenaphtenate, polyetheretehrketones, acrilates, silicones, polysiloxane, silanes, their blends, their respective copolymers or a mixture thereof.

The type of CPC fibres obtained may be multifilament, monofilament, staple (cotton or wool staple length) or chopped produced by any available method (e.g. melt extrusion, wet spinning, open-end, carding...), but also by further fibre coating after fibre spinning. Preferably, the CPC fibres are multifilament fibres, produced by multifilament spinning.

The final yarn (combination of several filaments or staples together) may comprise mixtures of conducting and non conducting fibres. The percentage of CPC fibres in a yarn may be comprised between 0,1 and 100%.

By CPC fibres it is meant not only macroscopically homogeneous fibres, but also co-extruded fibres, where the CPC is only a part of the final fibre, the external surface of the coextruded structure being at least partially conducting.

The final CPC textile can have, for example, a woven or knitted or braided or croquet or non-woven (using any type of available technology and any type of textile structure for each category) structure. Preferably, the final textile is a woven textile. More preferably, said woven textile have conductive yarns in one direction (warp or weft), and non conducting yarns in the other direction.

The aim of the invention is to obtain a CPC textile structure which is capable of detecting the level of dimensional deformation of its structure through the measurement of the resistivity variation induced by SH/SL of the several CPC fibres together. Such resistivity is correlated with the type of electrical conduction mechanism in the CPC fibres and between different CPC fibres.

To tune the level of SH/SL sensitivity of the CPC textile, it is possible to vary the following parameters:
- type of textile construction (e.g. weave style);
- CPC fibre density in the CPC textile (yarns or fibres/cm);
- insulating fibre types and density, crossing the CPC fibre, in the CPC textile.

These parameters influence directly the number of crossing points between fibres in a given surface. The higher the crossing points per unit surface are, the lower the relative variation of the resistivity for a given level of external solicitation of the CPC textile will be and the lower the subsequent level of sensitivity achieved by the CPC textile will be.

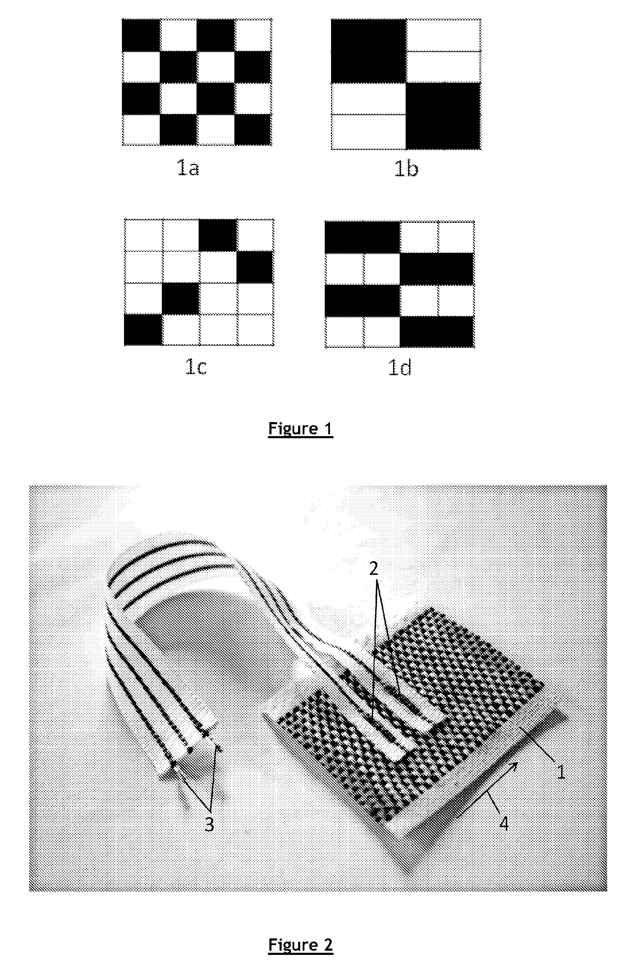

Figure 1 describes several examples of woven textile structures with different number of crossing points for a defined surface. In such examples the textile construction 1a will need a higher shear force to deformate, while the textile structure 1c will require a much lower one. In other words, under a given level of shear the textile structure 1 a will be less sensitive in comparison to the textile structures 1b, 1c or 1d. More precisely, a ranking based on the level of sensitivity (from the lowest to the highest one) of woven textiles in figure 1 will be textile 1 a, 1 d, 1 c, 1 b.

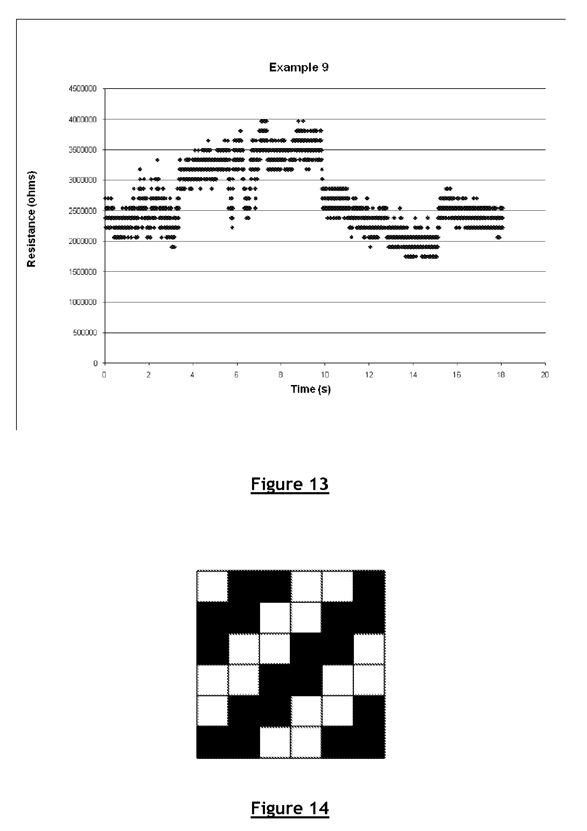

Figure 14 represents a specific textile woven structure called Twill 2x2 or Batavia da 4 or Serge 2x2. It is a textile structure quite flexible and open, more flexible than the plain, and less flexible than Panama 2*2 or 2*1. In this figure, the amount of crossing points of the warp (black) into the weft (white) is 21. This textile structure gives also a good sensitivity.

### Example

In a first example of this invention, a PLA polymer has been mixed with 4% by weight of CNT and spun into multifilament yarn containing 80 filaments with an average diameter of 70-120 micron/filament and with a tenacity of about 110 MPa, a tensile modulus of about 2 GPa, an elongation at break of 120% and an electrical resistance of 10E5 Ohm.cm. Such CPC multifilament yarn has then been woven with acrylic twisted yarn (33.84 Tex) using a woven structure Panama 2 (acrylic) X 1 (CPC fibre).

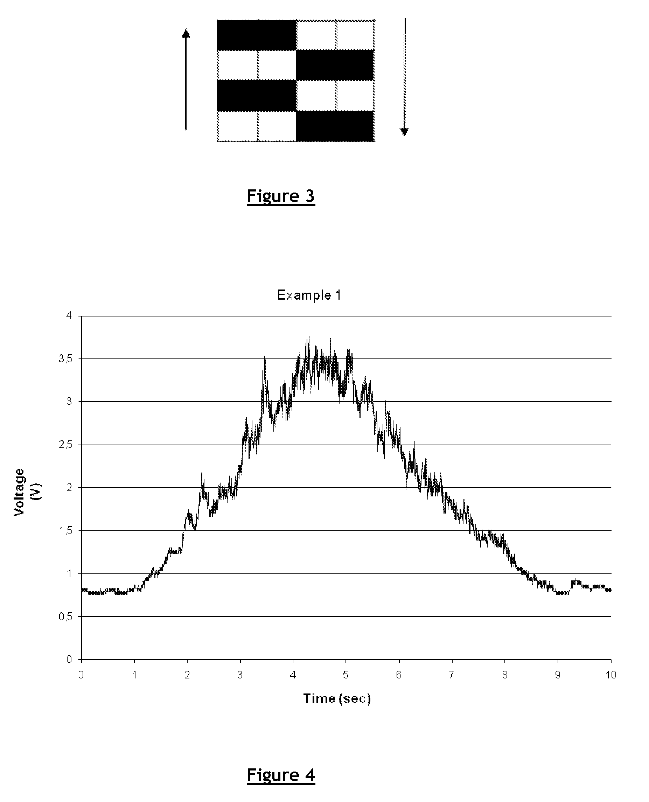

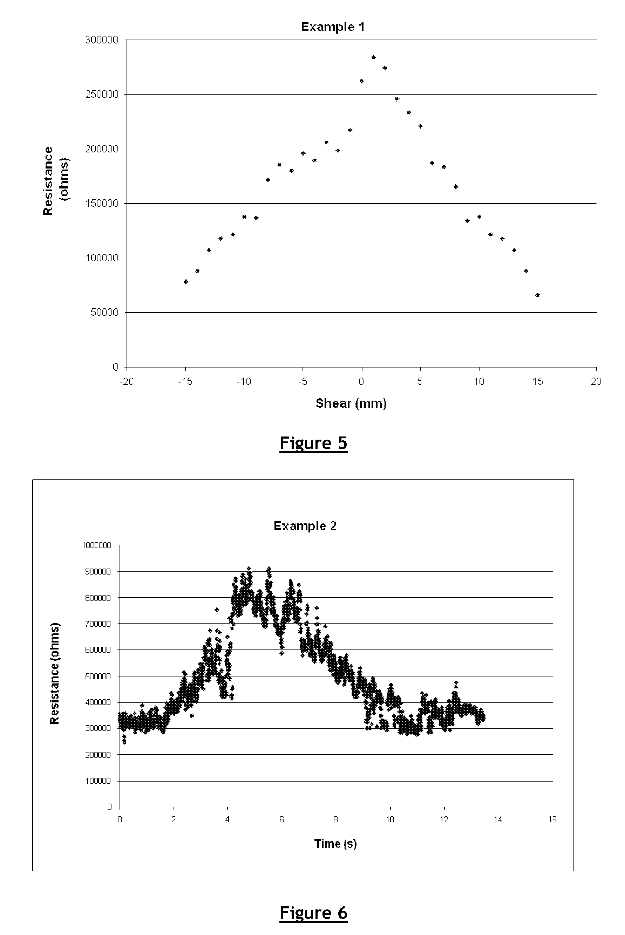

The fibre density was 5 yarns/cm for the CPC fibres and 17 yarns/cm for the acrylic. Such textile structure has then been connected with silver fibre 2, sewing them with the CPC fibres in the textile with another silver fibre. The level of sewing was good enough to ensure a very good and stable level of connectivity between the CPC fibres and the silver fibres. The silver fibres have then been connected by connectors 3 to an ohm meter equipment to register the level of resistivity generated as a function of the level of textile deformation (see figure 2). The textile has then been subjected to a shear solicitation in a particular direction 4 (see figure 3) and the level of electrical resistivity has been made in correlation with the level of displacement of the textile structure under external shear deformation (see figures 4 and 5).

Other samples have been produced, using fibres consisting of co-continuous polypropylene/polycaprolactone mixtures, polycaprolactone being first compounded with 4%CNT in the PCL phase. The fibres where produced using multifilament process (80 filaments). The numerical references of the samples are as follows: the count is 1190 Tex, the tenacity for the conductive fiber (PP-PCL+4%CNT 50-50) is 0.23cN/Tex (tenacity: 2.38MPa, tensile modulus: 67 MPa, elongation at break: 330%), the electrical resistance is 2.1E4 KOhm.cm. This biphasic yarns has been woven with a polypropylene (PP) multifilaments with a count of 214 Tex.
02 - Harness 4, Warp 6y/cm, Weft 4y/cm.
03 - Panama 2*2*1*1, Warp 6y/cm, Weft 4y/cm.
04 - Twill 3, Warp 6y/cm, Weft 3.5y/cm
05 - Panama 2*2*1*1, Warp 12y/cm, Weft 4y/cm
06 - Plain, Warp 6y/cm, Weft 3y/cm
07 - Harness 4, Warp 12y/cm, Weft 4y/cm
08 - Twill 3, Warp 12y/cm, Weft 3.5y/cm
09 - Plain, Warp 12y/cm, Weft 3y/cm

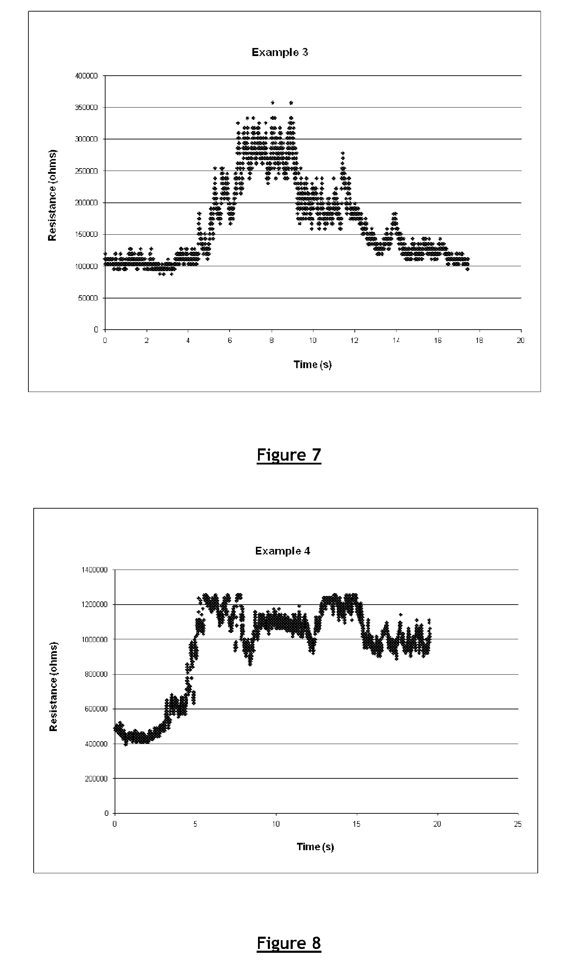

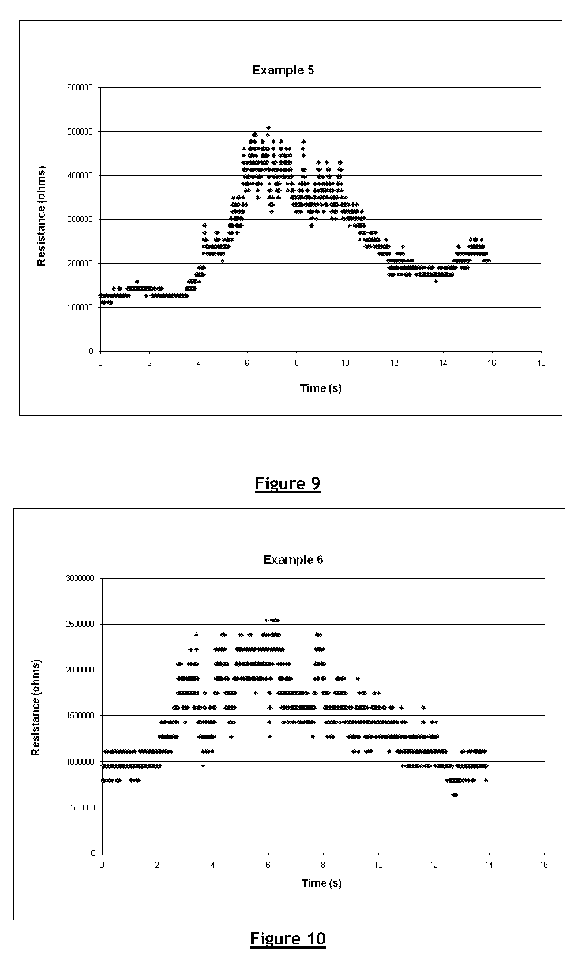

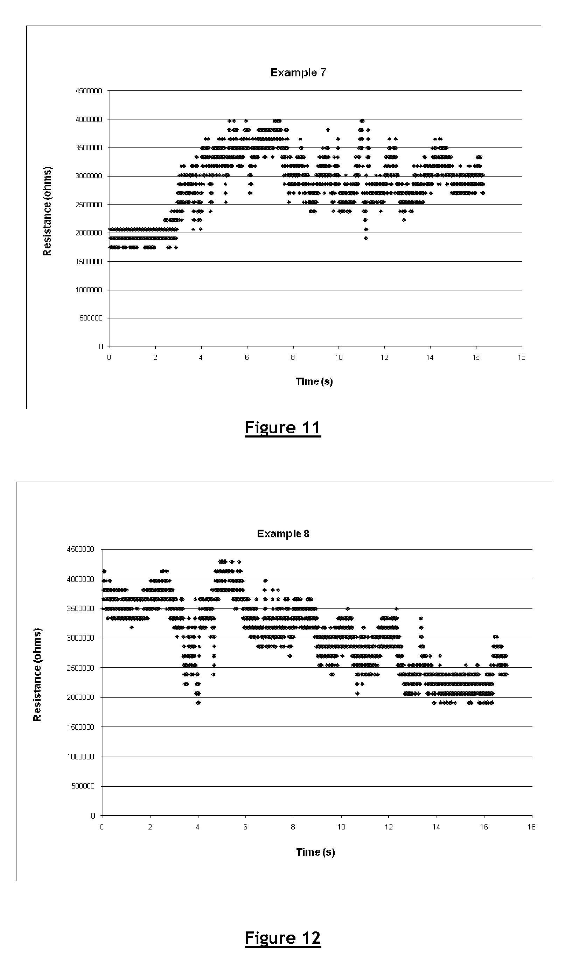

Two electrodes were then electrically connected to the textile as described in example 1 and electrically tested. The samples during the measurement were moved slowly by hand from one position of shear, through a neutral position (shear-free), to an opposite position of shear. The graphs in fig.6 to 13 show the resistance changes that occurred during the test.

## Claims

1. Shear sensor comprising two or more electrodes and an electrically conductive textile, said sensor measuring, in use, a resistivity variation once said textile is submitted to shear deformation, said textile comprising conductive fibres having a resistivity comprised between 10² Ohm.cm and 10⁷Ohm.cm and said fibres comprising a polymer matrix and a conductive filler.

2. Shear sensor according to claim 1 further comprising insulating fibres.

3. Shear sensor according to any of the previous claims wherein said textile is a woven textile.

4. Shear sensor according to claim 3 wherein said conductive fibres are forming either the weft or the warp of said woven textile.

5. Shear sensor according to claim 4 wherein the electrodes are arranged to measure, in use, the resistivity in a direction parallel to the conducting fibres.

6. Shear sensor according to any of the previous claims wherein the conductive fibres are multifilament fibres.

7. Shear sensor according to any of the previous claims wherein said polymer matrix is a polyester.

8. Shear sensor according to any of the previous claims wherein the polymer matrix comprises polylactic acid or polycaprolactone.

9. Shear sensor according to any of the previous claims wherein the polymer matrix comprises a co-continuous blend of at least two polymers, the conductive filler being dispersed in one of said polymers.

10. Shear sensor according to any of the previous claims wherein said filler comprises carbon nanotubes.

11. Shear sensor according to any of the previous claims wherein said filler is selected from the group consisting of metallic nanofibres and carbon nanofibres.

12. Method for measuring shear deformation comprising the steps of:
- providing a shear sensor according to any of the previous claims;
- measuring the conductivity of the textile between said two electrodes in a shear free state;
- measuring the conductivity of the textile between said two electrodes in a shear deformation to be characterised;
- comparing the conductivity in the deformed state with the conductivity in the non deformed state, the difference in conductivity being proportional to the shear deformation amplitude.
